(19) **Europäisches Patentamt**
**European Patent Office**
**Office européen des brevets**

(11) **EP 0 755 899 B1**

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int. Cl.⁶: **C01B 33/193**, H01M 2/16

(21) Anmeldenummer: **96108372.2**

(22) Anmeldetag: **25.05.1996**

(54) **Fällungskieselsäure**

Precipitated silica

Silice précipitée

(84) Benannte Vertragsstaaten:
**AT DE ES FR GB IT LU NL**

(30) Priorität: **26.07.1995 DE 19527278**

(43) Veröffentlichungstag der Anmeldung:
**29.01.1997 Patentblatt 1997/05**

(73) Patentinhaber:
**Degussa-Hüls Aktiengesellschaft**
**45764 Marl (DE)**

(72) Erfinder:
• **Türk, Günter, Dr.**
**63457 Hanau (DE)**

• **Schmidt, Gerold**
**63517 Rodenbach (DE)**
• **Siray, Mustafa, Dr.**
**53127 Bonn (DE)**
• **Meier, Karl**
**53347 Alfter (DE)**

(56) Entgegenhaltungen:
DE-A- 1 496 123       GB-A- 2 169 129
US-A- 3 351 495       US-A- 4 024 323
US-A- 4 237 083

• **CHEMICAL ABSTRACTS, vol. 89, no. 26,**
**25. Dezember 1978 Columbus, Ohio, US; abstract**
**no. 216262x, Seite 36; XP002028137 & BR 7 606**
**622 A (ASFALTOS VITORIA S. A.)**

**Beschreibung**

Die Erfindung betrifft eine Fällungskieselsäure, das Verfahren zu ihrer Herstellung und ihre Verwendung zur Herstellung von Batterieseparatoren.

Es ist bekannt, Fällungskieselsäuren für die Herstellung von mikroporösen Polyäthylen-Batterieseparatoren zu verwenden (US-PS 3,351,495, US-PS 4,024,323, US-PS 4,681,750). Bei den bekannten Kieselsäuren handelt es sich um normal-strukturierte Fällungskieselsäuren, deren Verarbeitung zu Batterieseparatorfolien nach einer gebräuchlichen Standardrezeptur im Compoundier- und Extrusionsverhalten erfolgt.

Aufgabe und Zielsetzung der Erfindung ist die Entwicklung einer hochstrukturierten Kieselsäure mit guter Strukturstabilität und niedriger BET-Oberfläche, ein Verfahren zu ihrer Herstellung, sowie ihre Verwendung bei der Herstellung von hochporösen Polyäthylen-Kieselsäure-Separatoren mit einer Gesamtporosität von $\geq$ 64 %, mit einem Aschegehalt von $\geq$ 68 Gew.%, beides bei 12 - 14 % Restölgehalt.

Gegenstand der Erfindung ist eine Fällungskieselsäure mit den folgenden physikalisch-chemischen Kenndaten:

| BET-Oberfläche: | DIN 66131 | 100 - 130 $m^2$/g |
|---|---|---|
| DBP-Absorption (wasserfrei): | DIN 53601 | $\geq$ 275 g/100 g |
| | ASTM D 2414 | |
| Trocknungsverlust (2 h/105 °C): | DIN ISO 787/II | 3,5 - 5,5 Gew.-% |
| | ASTM D 280 | |
| | JIS K 5101/21 | |
| Siebrückstand mit ALPINE-Luft-strahlsieb: | | |
| > 63 $\mu$m | | $\leq$ 10,0 Gew.-% |
| > 150 $\mu$m | | $\leq$ 0,1 Gew.-% |
| > 250 $\mu$m | | $\leq$ 0,01 Gew.-% |

Ein weiterer Gegenstand der Erfindung ist ein Verfahren zur Herstellung der Fällungskieselsäure mit den physikalisch-chemischen Kenndaten:

| BET-Oberfläche: | DIN 66131 | 100 - 130 $m^2$/g |
|---|---|---|
| DBP-Absorption (wasserfrei): | DIN 53601 | $\geq$ 275 g/100 g |
| | ASTM D 2414 | |
| Trocknungsverlust (2 h/105 °C): | DIN ISO 787/II | 3,5 - 5,5 Gew.-% |
| | ASTM D 280 | |
| | JIS K 5101/21 | |
| Siebrückstand mit ALPINE-Luft-strahlsieb: | | |
| > 63 $\mu$m | | $\leq$ 10,0 Gew.-% |
| > 150 $\mu$m | | $\leq$ 0,1 Gew.-% |
| > 250 $\mu$m | | $\leq$ 0,01 Gew.-% |

in dem man in einem Fällbehälter unter Rühren heißes Wasser von 90 - 91 °C vorlegt, handelsübliches Wasserglas mit einem Modul $SiO_2$ : $Na_2O$ = 3,34 : 1 ($SiO_2$ = 26,8 Gew.%; $Na_2O$ = 8,0 Gew.%) solange hinzugibt, bis eine bestimmte Alkalizahl (die Alkalizahl ist der Verbrauch an 1n HCl in Milliliter, der für die Neutralisation von 100 ml der Vorlagelösung bei der Verwendung von Phenolphtalein als Indikator benötigt wird) erreicht ist, danach unter Konstanthalten der Temperatur während der gesamten Fälldauer von 90 Minuten weiteres Wasserglas derselben Spezifikation und Schwefelsäure gleichzeitig an zwei voneinander getrennten Stellen derart hinzu gibt, daß die vorgesehene Alkalizahl eingehalten wird; danach die Fällungskieselsäuresuspension mit konzentrierter Schwefelsäure bis zu einem pH-Wert von 8,5 innerhalb von ca. 20 Minuten ansäuert, die Zugabe der Schwefelsäure unter Rühren und bei 90 - 91 °C dreißig Minuten lang die Fällung unterbricht, danach weiter bis pH = 4 mit konzentrierter Schwefelsäure ansäuert, danach die Fällungskieselsäure, deren Feststoffgehalt in der Suspension ca. 88 g/l aufweist, mittels einer Kammerfilterpresse abtrennt, wäscht, den erhaltenen Filterkuchen mittels Wasser und mechanischer Scherkräfte verflüssigt, mittels einer Pendelmühle vermahlt, welches dadurch gekennzeichnet ist, daß man während der Fällung eine konstante Alkalizahl im Bereich von 5 - 15, vorzugsweise von 7 einstellt.

In einer besonderen Ausführungsform wird die Sprühtrocknung der Kieselsäure mit einem Feststoffgehalt der zu versprühenden Kieselsäurespeise von 16 - 20 %, vorzugsweise von 18 %, einer Zentrifugalzerstäuberdrehzahl von 10.000 - 12.000 Upm. und Eintrittstemperaturen der Heizgase von 700 - 750 °C sowie Austrittstemperaturen von 90 - 120 °C durchgeführt.

In einer weiteren Ausführungsform der Erfindung kann an Stelle der Pendelmühle eine Querstrommühle zur Vermahlung verwendet werden.

In einer weiteren Ausführungsform der Erfindung kann das Auswaschen des mittels einer Filterpresse abgetrennten Filterkuchen mit chloridarmen Wasser (mit $\leq$ 20 ppm Chlorid), vorzugsweise mit Deionat oder Kondensat, bis sich im vermahlenen Endprodukt ein Chloridgehalt von $\leq$ 100 ppm Chlorid einstellt, durchgeführt werden.

In einer weiteren Ausführungsform der Erfindung kann ein Spinflashtrockner anstelle des Sprühtrockners eingesetzt werden. Dabei kann gegebenfalls auf eine Vermahlung der Kieselsäure verzichtet werden.

Ein weiterer Gegenstand der Erfindung ist die Verwendung der erfindungsgemäßen Fällungskieselsäure mit folgenden physikalisch-chemischen Kenndaten:

| BET-Oberfläche: | DIN 66131 | 100 - 130 m$^2$/g |
|---|---|---|
| DBP-Absorption (wasserfrei): | DIN 53601 | $\geq$ 275 g/100 g |
| | ASTM D 2414 | |
| Trocknungsverlust (2 h/105 °C): | DIN ISO 787/II | 3,5 - 5,5 Gew.-% |
| | ASTM D 280 | |
| | JIS K 5101/21 | |
| Siebrückstand mit ALPINE-Luftstrahlsieb: | | |
| > 63 $\mu$m | | $\leq$ 10,0 Gew.-% |
| > 150 $\mu$m | | $\leq$ 0,1 Gew.-% |
| > 250 $\mu$m | | $\leq$ 0,01 Gew.-% |

in Polyäthylen-Kieselsäure-Batterieseparatoren für Industriebatterien auf Blei-Säure-Basis, welche dadurch gekennzeichnet sind, daß sie eine Gesamtporosität von $\geq$ 64 %, einen spezifischen Durchgangswiderstand nach 24-stündiger Tränkung in 37 %iger Batteriesäure von < 0,60 m Ohm · inch$^2$/mil und einen Aschegehalt von $\geq$ 68 Gew.% bei einem Restölgehalt von 12 - 14 aufweisen.

Die erfindungsgemäße Fällungskieselsäure kann weiterhin in Kieselsäure-Batterieseparatoren für Starterbatterien auf Blei-Säure-Basis mit einem Kieselsäure-Polyethylen-Verhältnis von 2,5 : 1 - 3,5 : 1 eingesetzt werden, wobei die 8 bis 10 mil-Separatoren einen spezifischen Durchgangswiederstand von $\leq$ 0,60 Ohm · inch$^2$/mil bei einer Restölzahl von 12 - 14 % aufweisen können.

Die mikroporösen Trennelementen für Batterien können durch intensives Vermischen von Polyäthylen mit hohem Molekulargewicht, der erfindungsgemäßen Fällungskieselsäure, Prozeßflüssigkeit und Stabilisatoren, Weiterverarbeitung der Pulvermischung durch Extrusion zu einer Folie mit einer Folienstärke von 0,2 bis 0,7 mm und durch Extraktion der Prozeßflüssigkeit hergestellt werden.

Die Herstellung der hochporösen Batterieseparatorenfolien unter Verwendung der erfindungsgemäßen Kieselsäuren kann nach bekannten Methoden wie zum Beispiel gemäß

US-PS 3,351,495, US-PS 4,237,083 oder DE-AS 1,496,123 erfolgen.

Bevorzugt kann wie folgt vorgegangen werden:

Eine Richtrezeptur, bestehend aus:

| | |
|---|---|
| 5,4 - 7,7 | Gew.% hochmolekulares Polyäthylen |
| 0,1 - 0,2 | Gew.% Rußmasterbatch |
| 0,1 - 0,3 | Gew.% Stabilisator |
| 26,1 - 27,8 | Gew.% Fällungskieselsäure |
| 66,2 - 67,9 | Gew.% Mineralöl |

wird durch intensives Vermischen der einzelnen Komponenten in einem Schnellmischer in eine pulverförmige Mischung überführt. Die Weiterverarbeitung der Mischung erfolgt auf einem Zweischneckenextruder bei Temperaturen zwischen 190 und 200 °C. Die Formgebung der Separatorenfolie erfolgt mit einer Breitschlitzdüse und einem nachgeschalteten Kalander. Die Folienstärke liegt bei 0,2 bis 0,7 mm.

An den Vorgang der Extrusion und Kalandrierung schließt sich eine Extraktion an. Dazu wird das Mineralöl durch Extraktion mit n-Hexan weitgehend entfernt. Anschließend wird das aufgesaugte n-Hexan durch Trocknung bei Raumtemperatur entfernt. Wichtiger Gesichtspunkt bei der Beurteilung einer Kieselsäure ist ihr Verhalten bei ihrer Verarbeitung (Torquewerte und Schmelzendrücke).

Beurteilt werden weiterhin die Saugfähigkeit der Kieselsäure und Rieselfähigkeit der Mischung bei ihrer Herstellung. Beim Dosieren und bei der Extrusion der Mischung wird das Drehmoment an der Extruderwelle (torque) und der Schmelzendruck vor der Düse beurteilt.

Die Drehmomentmessung beruht auf der Stromaufnahme des Antriebsmotors und wird in Prozent der maximal zulässigen Stromaufnahme angegeben. Der Schmelzendruck in bar wird mit einer Druckmeßdose, deren Fühler vor der Zylinderwand in die Schmelze eintaucht, gemessen. Diese Meßstelle befindet sich zwischen Schneckenende und Düsenanfang.

Die Separatorenfolien werden wie folgt geprüft:

**Beispiele**

Es werden die folgenden Prüfmethoden angewandt:

*Ölextraktion der extrudierten Folie (Blacksheet) Restölgehalt 12 - 14*

**A)**

Durch die Extraktion von Batterieseparatoren-Folien (Blacksheet) wird das Öl in ein Lösungsmittel überführt. Diese ölreduzierte Folie wird dann "Greysheet" bezeichnet und entspricht dem Endprodukt des Separatorherstellprozeßes.

**B) Prüfziel:**

1. Einen möglichst gleichbleibenden Restölgehalt von 12 - 14% in der Folie (Greysheet) erzielen.

2. Herstellen einer Folie zu weiteren anwendungstechnischen Prüfungen.

3. Die Schrumpfung aufgrund der Extraktion bestimmen.

**C) Probenvorbereitung:**

1.1 Eine bestimmte Anzahl von Proben (min. 10) werden von der Batterieseparatorenfolienrolle (Blacksheet) abgeschnitten (Schere oder Messer).

1.2 Die Folienabschnitte werden auf ein bestimmtes Maß mittels Papierhebelschere zurechtgeschnitten.

1.3 Maße:

MD = 180 mm   MD = Maschinen-Laufrichtung

CMD = 150 mm CMD = quer zur Maschinen-Laufrichtung

**D) Durchführung:**

Die Extraktion des Öls aus der Folie erfolgt mittels n-Hexan in 3 Stufen.

1.1 Alle Proben (Blacksheet) wiegen.
Genauigkeit: ± 0.01 gr

1.2 Die Proben einzeln in das Lösungsmittelbad legen.

1.3 Verweilzeit im Lösungsmittelbad

a) 5-10 mil* Folien:
je 1 mal 2 Min pro Lösungsmittelbad

b) 22 mil* Folien:
je 1 mal 5 Min pro Lösungsmittelbad

1.4 Abtrockungszeit

Folien 15 Minuten bei laufender Lüftung im Abzug abtrocken lassen.

1.5 Alle Proben (Greysheet) wiegen.
Genauigkeit: ± 0.01 gr

*Bestimmung des elektrischen Durchgangswiderstandes von extrudierten Folien (Greysheet)*

**A)**

Eine Folienprobe wird in einem Säurebad auf den elektrischen Widerstand untersucht.

**B) Prüfziel:**

Eine definierte Aussage zum Durchgangswiderstand der Separatorenfolie ist als Flächenwiderstand bezogen auf die Foliendicke zu ermitteln.
Einheit: mOhm x inch$^2$/mil.

**C) Geräte:**

1.1 Battery-Tester Model 9100-2 Low Resistance Test System
Hersteller: Palico Instrument Labaratories U.S.A.

1.2 Wasserbad / temperierbar.

**D) Probenvorbereitung:**

Eine bestimmte Anzahl von Proben (min. 3) werden sequentiell der Prüfung unterzogen.

**E) Durchführung:**

1.1 An den vorbereiteten Proben werden die Foliendicken ermittelt.
Genauigkeit ± 0.01 mm.

1.2 Die Proben werden in Batteriesäure gelagert.

* 1 mil = 0,0254 mm

1.3 Nach der 20 minütigen Lagerung in Batteriesäure werden die Proben einzeln in die vorgesehene Vorrichtung des Batterie-Testers eingeführt.

1.4 Der Meßvorgang wird, wie in der Bedienungsanleitung des Batterie-Testers vermerkt, gestartet und die jeweiligen Meßdaten werden festgehalten.

1.5 Mit den ermittelten Werten wird ein arithmetischer Mittelwert gebildet.

1.6 Die gemessenen Proben werden erneut in Batteriesäure gelagert.

1.7 Nach der 24 stündigen Lagerung in Batteriesäure werden die Proben einzeln in die entsprechende Vorrichtung des Batterie-Testers eingeführt.

1.8 Der Meßvorgang wird wie in der Bedienungsanleitung des Batterie-Testers vermerkt, gestartet und die jeweiligen Meßdaten werden festgehalten.

1.9 Mit den ermittelten Werten wird ein arithmetischer Mittelwert gebildet.

## F) Messauswertung

1.1 "Durchgangswiderstand".

*Bestimmung der mechanischen Eigenschaften von extrudierten Folien (Greysheet) auf Zugfestigkeit und Bruchdehnung*

### A)

Eine Folienprobe wird bis zum Reißen gedehnt. Dabei wird die Dehngeschwindigkeit konstant gehalten. Die Dehnung und die aufgewendete Dehnkraft werden gemessen.

### B) Prüfziel:

Eine definierte Aussage über die Zugfestigkeit und Bruchdehnung der Separatorenfolie ist zu ermitteln.

### C) Geräte:

1.1 Universalprüfmaschine Typ TZM 771, 20kN
Hersteller: Otto Wolpert Werke GmbH 1.2 Zubehör: Pneumatikspannkopf für dünne Folien
Hersteller: Otto Wolpert Werke GmbH

1.3 Zubehör: Kraftaufnehmer 500 N
Hersteller: Otto Wolpert Werke GmbH

1.4 Folien-Rollenschneidmaschine

### D) Probenvorbereitung:

Eine bestimmte Anzahl von Proben (min. 2) werden sequentiell der Prüfung unterzogen.

### E) Durchführung:

1.1 Aus den Proben werden je 4 Streifen (quer zur Extrusionsrichtung CMD) auf das Maß 100 (CMD) x 25 (MD) mm geschnitten.

1.2 Die Foliendicke der Streifen wird ermittelt,
Genauigkeit ± 0.01 mm.

1.3 Die Universalprüfmaschine wird entsprechend der Bedienungsanleitung eingerichtet.

1.4 Der einzelne Prüfstreifen wird in die Pneumatikspannköpfe der Universalprüfmaschine eingespannt, so daß ein Abstand zwischen den Spannköpfen von 50 mm gegeben ist. Die Einspanntiefe der Streifen beträgt je Spannkopf 25 mm.

1.5 Der Kraftaufnehmer wird entsprechend der Bedienungsanleitung auf Null abgeglichen.
Messbereich 0-50 N.

1.6 Die Abzugsgeschwindigkeit beträgt 500 mm/min.

1.7 Der Messvorgang wird gestartet. 1.8 Mit den ermittelten Werten wird ein arithmetischer Mittelwert gebildet.

**F) Messauswertung**

1.1 "Zugfestigkeit":

Kraftaufnahme in N / Fläche in mm$^2$ (Prüfstreifenbreite Prüfstreifendicke) = Zugfestigkeit in N/mm$^2$

1.2 "Bruchdehnung":

Gesamte Länge der Probe nach dem Reißen bezogen auf die Anfangslänge zwischen den Einspannvorrichtungen multipliziert mit 100% ergibt die Bruchdehnung.

*Ölextraktion der extrudierten Folie (Blacksheet) Restölgehalt <0,5 % / "Nullextraktion"*

A)

Durch die Extraktion von Batterieseparatoren-Folien (Blacksheet) wird das Öl in ein Lösungsmittel überführt. Diese annähernd ölfreie Folie wird dann weiteren Prüfungstests unterzogen.

**B) Verfahrensziel:**

1. Einen möglichst gleichbleibenden Restölgehalt von 12-14% in der Folie (Greysheet) erzielen.

2. Herstellen von Folien zu weiteren anwendungstechnischen Prüfungen.

3. Die Schrumpfung aufgrund der Extraktion bestimmen.

**C) Probenvorbereitung:**

1.1 Eine bestimmte Anzahl von Proben (min. 10) werden von der Batterieseparatorenfolienrolle (Blacksheet) abgeschnitten (Schere oder Messer).

1.2 Die Folienabschnitte werden auf ein bestimmtes Maß mittels Papierhebelschere zurecht geschnitten.

1.3 Maße:

MD = 180 mm   MD = Maschinen-Laufrichtung

CMD = 150 mm CMD = quer zur Maschinen-Laufrichtung

**D) Durchführung:**

Die Extraktion des Öls aus der Folie erfolgt in 3 Stufen (3 Edelstahl Behälter a 10 l), wobei n-Hexan als Extraktionsmittel verwendet wird.

1.1 Alle Proben (Blacksheet) wiegen.
Genauigkeit: ± 0.01 gr.

1.2 Die Proben einzeln in das Lösungsmittelbad legen.

1.3 Verweilzeit im Lösungsmittelbad

    a) 5-10 mil* Folien:
je1 mal 2 Minuten pro Lösungsmittelbad.

    b) 22 mil* Folien:
je 1 mal 5 Minuten pro Lösungsmittelbad.

1.4 Die Proben wie unter 1.3 beschreiben in der 4. Stufe nochmal extrahieren, jedoch mit reinem, ölfreien n-Hexan; d.h. das Lösungsmittel soll ölrückstandsfrei sein.

1.5 Abtrocknungszeit:
Folien 15 Minuten bei laufender Lüftung im Abzug abtrocken lassen.

1.6 Alle Proben (Greysheet) wiegen.
Genauigkeit: ± 0.01 gr.

*Porenvolumen*

**A. Prüfziel**
Es wird das offene Porenvolumen in Relation zum Gesamtvolumen bestimmt.

**B.**

Das Porenvolumen ist bedeutsam für das elektrische Verhalten in der Batterie und das Volumen des verdrängten Elektrolyten.

**C. Geräte**

1.1 Waage mit Draht und Haken

1.2 1-l-Becher

1.3 Vakuumdesiccator

1.4 Vakuumpumpe

1.5 Papiermesser

1.6 Aerosol OT (Cyanamid)
Wäßrige Lösung mit einer Konzentration von 0,1 %

**D. Proben**

1.1 Schneide 3 Separatorproben in der Größe von 3,0" x 4,0" (76 mm x 102 mm).

1.2 Wiege jede Probe mit einer Genauigkeit von 0,01 g (Trockengewicht).

**E. Verfahren**

* 1 mil = 0,0254 mm

8

1.1 Lege die Proben in den 1-l-Becher und bedecke sie vollständig mit 0,1 % Aerosol OT.

1.2 Lege die Proben in den Vakuumdesiccator und evakuiere mit der Vakuumpumpe.

1.3 Hänge die Proben nach 4 Stunden an die Wage und bestimme das Gewicht der in Wasser getauchten Proben (Tauchgewicht).

1.4 Trockne die Proben durch Abwischen mit einem Tuch.

1.5 Wiege die Proben an der Luft (Feuchtgewicht)

## F. Berechnung

$$\text{Porenvolumen} = \frac{(\text{Feuchtgewicht - Trockengewicht}) \times 100}{\text{Feuchtgewicht - Tauchgewicht}}$$

*Bestimmung des Aschegehaltes von kieselsäurehaltigen Polyäthylen-Batterieseparatoren*

## A. Erforderliche Geräte

1.1 Analysenwaage, Wägegenauigkeit 0,1 mg

1.2 Exsikkator

1.3 Muffelofen: 950 ± 10 °C

1.4 Tiegel: entweder Porzellantiegel Typ A1 mit Deckel, welcher ein Loch mit 2 mm ⌀ haben sollte; oder Quarztiegel mit Deckel, Typ QGT, Bad Harzburg, nach Hr. Dr. Rademacher, Abmessungen: ⌀ 27 mm, Höhe 47 mm

## B. Durchführung

1.1 Bestimmung der flüchtigen Bestandteile Ca. 1 g einer bei 105 °C, 1 h vorgetrockneten Kunststoff-Präparation werden auf ± 0,0001 g Genauigkeit in den mit Deckel versehenen Quarztiegel eingewogen (E): Der mit Deckel verschlossene Tiegel wird zum Abdestillieren der flüchtigen Bestandteile 7.0 min in einen auf 950 ± 10 °C temperierten Muffelofen gestellt. Nach dem Abkühlen im Exsikkator wird der Tiegel mit Deckel ausgewogen (A).

1.2 Bestimmung des Aschegehaltes Der offene Tiegel und der Deckel werden anschließend bis zur Gewichtskonstanz (1 - 1,5 h) bei 950 °C, unter Luft weitergeglüht. Nach dem Abkühlen im Exsikkator wird der Tiegel mit Deckel ausgewogen ($A_1$).

1.3 Berechnung

1.3.1 Flüchtige Bestandteile:

$$\frac{(1 - A)}{E} \times 100 \ [\%]$$

1.3.2 Aschegehalt:

$$\frac{A}{E} \times 100 \ [\%]$$

1.3.3 Kieselsäuregehalt:

$$\frac{A - A_1}{E} \times 100 [\%]$$

E = Einwaage Konzentrat nach dem Vortrocknen [g]

A = Auswaage nach Bestimmung der flüchtigen Bestandteile (2.1) [g]

$A_1$ = Auswaage nach Bestimmung der Asche (2.2) [g]

**Beispiel 1 (Vergleichsbeispiel)**

Das Handelsprodukt HiSil®SBG der US-Firma Pittsburgh Plate Glass Company, Pittsburgh, USA, wird gemäß der Lehre der US-PS 4,681,750 hergestellt. Die physik.-chem. Daten sind in Tabelle 1 aufgeführt.

**Beispiel 2 (gemäß Erfindung)**

In einem 75 $m^3$ großen Holztank wird eine Vorlage bereitet, wozu 1.698 kg Natriumsilikatlösung (8,90 Gew.% $Na_2O$; 27,73 Gew.% $SiO_2$; mit Modul $SiO_2$: $Na_2O$ = 3,22) und 56,6 $m^3$ heißes Wasser gemischt und auf 90 °C eingestellt werden. Die Alkalizahl der Vorlage (Verbrauch von 1n HCl pro 100 ml Vorlagelösung gegen Phenolphtalein) liegt bei 7,0.
Während der folgenden 90 Minuten werden gleichzeitig unter Konstanthalten der Alkalizahl von 7 und einer Temperatur von 90 - 91 °C 21.140 kg Natriumsilikatlösung (57 °C, 8,90 Gew.% $Na_2O$ und 27,73 Gew.% $SiO_2$ mit Modul $SiO_2$ : $Na_2O$ = 3,22) sowie 2.851 kg an 94 %iger Schwefelsäure in die Vorlage unter Rühren einfließen gelassen.
Anschließend wird die Zufuhr an Natruimsilikatlösung gestoppt und die Zufuhr der 94 %igen Schwefelsäure derart fortgeführt, daß sich nach ca. 25 Minuten ein pH-Wert der Fällungssuspension von 8,5 einstellt.
Danach schließt sich eine 30 minütige Unterbrechungsphase bei pH = 8,5 an, während derer weder Säure noch Wasserglaslösung in die Fällsuspension einfließen.
Schließlich wird mit 94 %iger Schwefelsäure deren Zufuhr derartig fortgesetzt, daß sich nach ca. 10 Minuten ein pH-Wert der Fällungssuspension um ca. 4,0 einstellt. Der Feststoffgehalt der Suspension liegt bei 88 g $SiO_2$/ltr.
Diese Fällungskieselsäuresuspension wird mit 45.920 Liter Wasser verdünnt, danach einer Kammer-Filterpresse zur Abtrennung der Kieselsäure zugeführt und anschließend mit chloridarmem Wasser gewaschen.
Nach dem Waschprozeß wird der Filterkuchen, dessen Feststoffgehalt bei ca. 20 Gew.% liegt, mittels mechanischer Scherkräfte unter Zugabe von konzentrierter Schwefelsäure verflüssigt. Dabei wird solange Schwefelsäure zugesetzt, bis der pH-Wert der Kieselsäuresuspension bei ca. 3,7 bis 4,0 liegt.
Diese Kieselsäuresuspension wird anschließend einem Sprühtrockner, der mit einer schnell rotierenden "Atomizer-Scheibe" ausgerüstet ist, zwecks Zerstäubung zugeführt. Es werden ca. 9,0 $m^3$ der Suspension pro Stunde zerstäubt und sprühgetrocknet. Die Drehzahl der Scheibe liegt bei 10.000 Upm. Es werden ca. 1,8 t (9 $m^3$ · 20 Gew.% = 1,8 t $SiO_2$) Kieselsäure pro Stunde erhalten. Die Beheizung des Sprühtrockners erfolgt mittels Erdgas. Die Eintrittstemperatur der Heizgase liegt bei 700 bis 750 °C, die Temperatur der austretenden Gase bei 113 bis 118 °C. Die mittlere Verweilzeit eines Kieselsäurepartikels im Heizgasstrom beträgt ca. 9 bis 10 Sekunden. Die sprühgetrocknete Fällungskieselsäure wird durch einen Filter vom Heizgasstrom abgetrennt. Sie wird mit einer Pendelmühle vermahlen. Es wird eine Kieselsäure erhalten, deren physikalisch-chemischen Daten in Tabelle 1 aufgeführt sind.

**Beispiel 3 (gemäß Erfindung)**

Die Herstellung der Kieselsäure erfolgt gemäß Beispiel 2. Einzige Die Vermahlung erfolgt auf einer Querstrommühle UP 1000 von der Firma ALPINE, Augsburg. Die physikalisch-chemischen Daten der erhaltenen Kieselsäure sind in Tabelle 1 aufgeführt.

**Beispiel 4 (gemäß Erfindung)**

Die Herstellung der Kieselsäure erfolgt bis zur Auswaschung des Kammerfilterkuchen gemäß Beispiel 2. Danach schließt sich eine Spinflashtrocknung an. Die physikalischchemischen Daten sind in Tabelle 1 aufgeführt.
Die Bestimmung der Parameter erfolgt mit folgenden Meßmethoden:

| 1.) BET-Oberfläche: | DIN 66 131 |
|---|---|
| 2.) DBP-Absorption: | DIN 53 601 / ASTM D 2414 |
| 3.) Trocknungsverlust: | DIN ISO 787/II, ASTM D 280, JIS K 5101/21 |
| 4.) Siebrückstand mit ALPINE-Luftstrahlsieb: | DEGUSSA-Hausmethode, wie nachfolgend beschrieben |
| 5.) Chloridgehalt: | Chemisch-analytisch. |

*Bestimmung des Siebrückstandes mit dem ALPINE-Luftstrahlsieb*

Zur Bestimmung des Siebrückstandes wird die Fällungskieselsäure durch ein 500 $\mu$m Sieb abgesiebt, um eventuell vorhandene Entlüftungsknoten zu entfernen. Dann werden 10 g des gesiebten Materials auf ein bestimmtes Luftstrahlsieb gegeben und bei einem Unterdruck von 200 mm Wassersäule abgesiebt.

Tabelle 1

| Physikalisch-chemische Daten von Fällungskieselsäuren (Beispiele Nr. 1 - 4) | | | | |
|---|---|---|---|---|
| Beispiel Nr. | 1 | 2 | 3 | 4 |
| Fällungskieselsäure: Bezeichnung/Parameterauswahl | Handelsprodukt HiSil®SBG | Erfindungsgemäße Kieselsäure | Erfindungsgemäße Kieselsäure | Erfindungsgemäße Kieselsäure |
| BET-Oberfläche ($m^2$/g) | 155 | 121 | 116 | 128 |
| DBP-Absorption (g/100 g) (wasserfrei) | 226 | 285 | 278 | 275 |
| Trocknungsverlust (Gew.-%) (2 h/105 °C) | 5,6 | 4,6 | 5,5 | 4,2 |
| Siebrückstand mit ALPINE-Luftstrahlsieb (Gew.-%) | | | | |
| > 63 $\mu$m | 0,23 | 1,0 | < 0,4 | 8,4 |
| > 150 $\mu$m | < 0,01 | 0,01 | n.b. | n.b. |
| > 250 $\mu$m | < 0,01 | < 0,01 | n.b. | 0,02 |
| Chloridgehalt (ppm) | 176 | 68 | 158 | 270 |

Fällungskieselsäurepartikel, die sich am Acrylglasdeckel des Siebgerätes absetzen, werden durch einige Schläge auf den Knopf des Siebdeckels abgeklopft. Die Siebung ist beendet, wenn der Rückstand konstant bleibt, was meistens am rieselfähigen Aussehen zu erkennen ist. Zur Sicherheit siebt man dann noch eine Minute. Im allgemeinen dauert der Siebvorgang fünf Minuten. Bei Materialien, die nur Kornanteile von < 500 $\mu$m enthalten, wird die Probe vorher nicht abgesiebt, sondern direkt auf das Luftstrahlsieb gegeben.

Bei eventuell sich bildenden Agglomeraten wird der Siebvorgang kurz unterbrochen und die Agglomerate werden mit einem Pinsel unter leichtem Druck zerstört. Nach der Siebung wird der Siebrückstand vorsichtig von dem Luftstrahlsieb geklopft und zurückgewogen.

Berechnung:    Der Siebrückstand wird in Gewichtsprozenten in Verbindung mit der Maschenweite des Siebes angegeben.

Geräte:    ALPINE-Luftstrahlsieb, Labortyp S 200, mit Siebgewebe nach DIN 4188.

*Bestimmung des Chloridgehaltes in gefällten Kieselsäuren*

Durchführung:

Von Kieselsäureproben, die ca. 100 ppm Chlorid enthalten, werden 1 - 3 g genau eingewogen und in einem 150 ml-Becherglas mit 25 ml destillierten Wassers und 25 ml einer 5 N Natriumhydroxid-Lösung verrührt. Die Suspension wird auf einer Heizplatte so lange erhitzt, bis sie eine klare Lösung ergibt. Die Lösung wird im Wasserbad gekühlt und mit 25 ml 50 %iger Salpetersäure versetzt. Die Zugabe der Salpetersäure erfolgt in einem Guß unter Rühren. Nach dem erneuten Abkühlen der Lösung wird etwas Azeton zugegeben.

Danach wird die Titration mit 0,05 N Silbernitratlösung ausgeführt.

Für jede Bestimmungsreihe wird eine Blindwerttitration durchgeführt, wobei der Blindwert vom Wert der Probenbestimmung abgezogen wird. Dazu ist es erforderlich, daß dieselben Reagentien benutzt werden, die auch für die Chloridbestimmung der Einzelproben zum Einsatz kommen.

Die erste Ableitung der Titrationskurve wird aufgezeichnet. Der Endpunkt der Titration ist erreicht, wenn die Kurve ein deutliches Maximum durchläuft. Laut Differentialkurve entspricht ein 1 cm-Abschnitt dem Verbrauch von 0,1 ml der 0,05 N Silbernitratlösung.

Berechnung:

1 cm entspricht 0,1 ml an AgNO$_3$-Lösung

V = Verbrauch in ml (Strecke A - Blindwert)

E = Probeneinwaage in Gramm

N = Normalität der Silbernitrat-Lösung

F = Faktor für Silbernitrat-Lösung

$$\text{ppm Cl}^- = \frac{V \times 35,5 \times N \times 100 \times F \times 10.000}{1000 \cdot E}$$

Lösungen, Reagentien und Geräte:

| | |
|---|---|
| Silbernitratlösung; | 0,05 N |
| Salpetersäure; | 50 %ig |
| NaOH-Lösung; | 5 N |
| Azeton Salzsäurelösung; | 0,01 N (für Eichung der Silbernitratlösung) |
| Titrator TTT 60 | (Hersteller: Fa. Radiometer) |
| Digital-pH-Meter PHM 63 | (Hersteller: Fa. Radiometer) |
| Automatische Bürette ABU 12 | (Hersteller: Fa. Radiometer) |
| mit 2,5 ml Bürette Recorder REC 61 | (Hersteller: Fa. Radiometer) |
| Selektive Chloridelektrode | (Hersteller: Fa. Radiometer) |
| Bezugselektrode Magnetrührer | (Hersteller: Fa. Radiometer) |

In den Beispielen 5 - 19 werden die gemäß Beispielen 1 - 4 erhaltenen Fällungskieselsäuren in Separatorfolien geprüft.

**Beispiel 5**

750 g Kieselsäure gemaß Beispiel 1 werden in einem Fluidmischer (Typ FM 10 C der Firma Thyssen Henschel, Kassel, BRD) mit 222 g Hostalen GUR 4150 (ultrahochmolekulare Polyäthylentype hoher Dichte der Firma HOECHST AG, Frankfurt a.M.) mit 2,4 g Antioxydans Topanol®O (Firma ICI, England; butyliertes Hydroxytoluol), sowie mit 4,8 g Farbrußbatch COLCOLOR®E50/G (Firma Degussa AG., Frankfurt/Main). 50 % Pigmentrußanteil PRINTEX®G in Polyäthylen niedriger Dichte) bei einer Drehzahl von 700 Upm vermischt und dann mit einer Menge von 1655 g Gravex-Mineralöl 942 (Firma Shell) mit Hilfe einer Zahnradpumpe und einer Einstoffdüse besprüht. Hierdurch entsteht ein rieselfähiges und kontinuierlich dosierbares Pulver, das mit Hilfe eines Doppelschneckenextruders (Typ ZSK 30 M 9/2 der Firma Werner & Pfleiderer, Stuttgart) mit heizbarer Flachfoliendüse von 220 mm Breite (Firma Göttfert Prüfmaschinen GmbH, Buchen) sowie mit Hilfe eines Dreiwalzenkalanders (Typ Polyfol 150 3 S der Firma Ruth Schwabenthan, Berlin) zu einer Folie von etwa 0,550 - 0,600 mm Dicke verarbeitet wird. Bei einer Schneckendrehzahl von 105 Upm wird ein Temperaturprofil zwischen Einzugszone des Extruders und Düse von 150 bis 200 °C gewählt. Die zwischen Extruder und Düse gemessene Schmelzentemperatur stellt sich dabei auf 196 °C ein. Am Doppelschnek-kenextruder lassen sich der Schmelzendruck in bar und das Drehmoment der Schnecken in % des maximal zulässigen Drehmoments als Maß für das Verarbeitungsverhalten der Mischung während der Extrusion ablesen. Aus der derart hergestellten Folie wird das Mineralöl anschließend mit Hilfe von Hexan weitgehend extrahiert, so daß eine mikroporöse Separatorfolie entsteht.

Die Messung des elektrischen Durchgangswiderstandes, der mechanischen Eigenschaften wie Zugfestigkeit, Bruchdehnung, der Gesamtporosität und des Aschegehaltes der von bis auf 12 - 14 % Restölgehalt extrahierten Folien wird nach Maßgabe der oben beschriebenen Methoden durchgeführt. Die an der gemäß Beispiel 5 hergestellten Folien ermittelten Meßwerte sind in Tabelle 2 zusammengestellt. Diese Werte bilden die Bezugswerte für die Beispiele 6 - 8, in denen erfindungsgemäße Kieselsäure nach Beispiel 2 zum Einsatz gelangt.

**Beispiel 6**

Verfahrensweise gemäß Beispiel 5, wobei die Fällungskieselsäure durch die erfindungsgemäße Kieselsäure nach Beispiel 2 ersetzt wird. Die Foliendaten finden sich in Tabelle 2.

**Beispiel 7**

In diesem Beispiel wird gemäß Beispiel 6 verfahren, wobei die Anwendung einer Prozeßölmenge von 1700 g statt 1655 g erfolgt. Die Foliendaten finden sich in Tabelle 2.

**Beispiel 8**

In diesem Beispiel wird gemäß Beispiel 6 verfahren. Einzige Ausnahme ist die Anwendung einer Prozeßölmenge von 1900 g statt 1655 g. Die Foliendaten finden sich in Tabelle 2.

**Beispiel 9**

Es werden Separatormischungen mit einem Kieselsäure : Polymer-Verhältnis von 4:1 hergestellt, extrudiert und charakterisiert. Es wird gemäß Beispiel 5 gearbeitet. Es werden jedoch nur 188 g des in Beispiel 5 verwendeten Polymers eingesetzt (statt 222 g). Außerdem wird, abweichend von Beispiel 5, eine Oelmenge von 1700 g statt 1655 g verwendet. Die ermittelten Foliendaten finden sich in Tabelle 3. Diese Werte bilden die Bezugswerte für die Beispiele 10 - 12, in denen erfindungsgemäße Kieselsäure nach Beispiel 2 zum Einsatz gelangt.

Tabelle 2

| Herstellungsbedingungen und Eigenschaften von hochporösen Separatorfolien, die handelsübliche und erfindungsgemäße, sprühgetrocknete Fällungskieselsäuren enthalten. Verhältnis Kieselsäure : Polymer = 3,4 : 1 | | | | | |
|---|---|---|---|---|---|
| Beispiel Nr. | | 5 | 6 | 7 | 8 |
| Fällungskieselsäure: | | Handelsprodukt HiSil®SBG | Erfindungsgemäße Kieselsäure (Beispiel 2) | Erfindungsgemäße Kieselsäure (Beispiel 2) | Erfindungsgemäße Kieselsäure (Beispiel 2) |
| Oelmenge | Gramm | 1655 | 1655 | 1700 | 1900 |
| Schmelzentemperatur | °C | 196 | 198 | 195 | 193 |
| Schmelzendruck | bar | 133 | 148 | 136 | 96 |
| Drehmoment | % | 53 | 51 | 50 | 44 |
| Spezifischer Durchgangswiderstand: | | | | | |
| nach 20 Minuten "soak" | $m\Omega\ in.^2/mil$ | 1,46 | 1,27 | 1,43 | 1,23 |
| nach 24 Stunden "soak" | $m\Omega\ in.^2/mil$ | 1,06 | 0,87 | 0,94 | 0,81 |
| Gesamtporosität | Vol.% | 55,1 | 58,7 | 58,8 | 58,4 |
| Aschegehalt | Gew.% | 68,1 | 68,2 | 68,0 | 67,9 |
| Mechanische Eigenschaften: | | | | | |
| Dehnung | % | 749 | 592 | 782 | 815 |
| Zugfestigkeit | $N/mm^2$ | 4,15 | 4,79 | 4,47 | 4,47 |

Tabelle 3

| Herstellungsbedingungen und Eigenschaften von hochporösen Separatorfolien, die handelsübliche und erfindungsgemäße, sprühgetrocknete Fällungskieselsäuren enthalten. Verhältnis Kieselsäure : Polymer = 4 : 1 | | | | | |
|---|---|---|---|---|---|
| Beispiel Nr. | | 9 | 10 | 11 | 12 |
| Fällungskieselsäure: | | Handelsprodukt HiSil®SBG | Erfindungsgemäße Kieselsäure (Beispiel 2) | Erfindungsgemäße Kieselsäure (Beispiel 2) | Erfindungsgemäße Kieselsäure (Beispiel 2) |
| Oelmenge | Gramm | 1700 | 1700 | 1900 | 2100 |
| Schmelzentemperatur | °C | 194 | 197 | 192 | 193 |
| Schmelzendruck | bar | 102 | 116 | 82 | 61 |
| Drehmoment | % | 47 | 44 | 40 | 35 |
| Spezifischer Durchgangswiderstand: | | | | | |
| nach 20 Minuten "soak" | $m\Omega$ in.$^2$/mil | 1,27 | 0,92 | 0,90 | 0,83 |
| nach 24 Stunden "soak" | $m\Omega$ in.$^2$/mil | 0,85 | 0,64 | 0,60 | 0,57 |
| Gesamtporosität | Vol.% | 60,3 | 63,9 | 64,3 | 64,8 |
| Aschegehalt | Gew.% | 70,4 | 70,1 | 70,2 | 70,1 |
| Mechanische Eigenschaften: | | | | | |
| Dehnung | % | 722 | 759 | 750 | 702 |
| Zugfestigkeit | N/mm$^2$ | 3,43 | 3,65 | 2,90 | 2,50 |

Tabelle 4

| Herstellungsbedingungen und Eigenschaften von hochporösen Separatorfolien, die handelsübliche und erfindungsgemäße, sprühgetrocknete Fällungskieselsäuren enthalten. Verhältnis Kieselsäure : Polymer = 5 : 1 | | | | | |
|---|---|---|---|---|---|
| Beispiel Nr. | | 13 | 14 | 15 | 16 |
| Fällungskieselsäure: | | Handelsprodukt HiSil®SBG | Erfindungsgemäße Kieselsäure (Beispiel 2) | Erfindungsgemäße Kieselsäure (Beispiel 2) | Erfindungsgemäße Kieselsäure (Beispiel 2) |
| Oelmenge | Gramm | 1700 | 1700 | 1900 | 2000 |
| Schmelzentemperatur | °C | 192 | 195 | 191 | 190 |
| Schmelzendruck | bar | 76 | 100 | 70 | 60 |
| Drehmoment | % | 48 | 44 | 37 | 34 |
| Spezifischer Durchgangswiderstand: | | | | | |
| nach 20 Minuten "soak" | $m\Omega$ in.$^2$/mil | 0,86 | 0,68 | 0,73 | 0,60 |
| nach 24 Stunden "soak" | $m\Omega$ in.$^2$/mil | 0,68 | 0,49 | 0,42 | 0,51 |
| Gesamtporosität | Vol.% | 63,1 | 68,7 | 70,1 | 70,4 |
| Aschegehalt | Gew.% | 73,4 | 73,1 | 73,5 | 73,0 |
| Mechanische Eigenschaften: | | | | | |
| Dehnung | % | 558 | 591 | 608 | 596 |
| Zugfestigkeit | N/mm$^2$ | 2,20 | 2,44 | 2,18 | 2,24 |

**Beispiel 10**

Die Herstellung der Separatorfolie erfolgt gemäß Beispiel 9. Es wird die in Beispiel 9 eingesetzte Kieselsäure HiSil®SBG durch die erfindungsgemäße Kieselsäure gemäß Beispiel 2 ersetzt. Die Foliendaten sind in Tabelle 3 enthalten.

**Beispiel 11**

Es wird gemäß Beispiel 10 verfahren. Einzige Ausnahme ist die Anwendung einer Prozeßölmenge von 1900 g statt 1700 g. Die Foliendaten sind in Tabelle 3 aufgeführt.

**Beispiel 12**

Es wird gemäß Beispiel 10 gearbeitet. Einzige Ausnahme ist die Anwendung einer weiter erhöhten Prozeßölmenge von 2100 g statt 1700 g Oel. Die Foliendaten sind in Tabelle 3 aufgeführt.

**Beispiel 13**

Es werden Separatormischungen mit einem Kieselsäure : Polymer-Verhältnis von 5:1 hergestellt, anschließend extrudiert, extrahiert und charakterisiert.
Es wird gemäß Beispiel 5 gearbeitet. Es werden jedoch nur 150 g des dort verwendeten Polymers eingesetzt (statt 222 g). Außerden wird eine Oelmenge von 1700 g statt 1655 g verwendet. Die ermittelten Foliendaten finden sich in Tabelle 4. Diese Werte bilden die Bezugs- und Vergleichsdaten für die Beispiele 14 - 16, in denen erfindungsgemäße Kieselsäure nach Beispiel 2 zum Einsatz gelangt.

**Beispiel 14**

Die Herstellung der Separatorfolie erfolgt gemäß Beispiel 13. Es wird die in Beispiel 13 eingesetzte handelsübliche Kieselsäure HiSil[®]SBG durch die erfindungsgemäße Kieselsäure nach Beispiel 2 ersetzt. Die bestimmten Foliendaten sind in Tabelle 4 zusammengefaßt.

**Beispiel 15**

Es wird gemäß Beispiel 14 gearbeitet. Einzige Ausnahme ist die Anwendung einer Prozeßölmenge von 1900 g statt 1700 g. Die Foliendaten sind in Tabelle 4 aufgelistet.

**Beispiel 16**

Es wird gemäß Beispiel 14 gearbeitet. Einzige Ausnahme ist die Anwendung einer Prozeßölmenge von 2000 g statt 1700 g. Die Foliendaten sind in Tabelle 4 aufgeführt.

Die Ergebnisse gemäß Tabellen 2 - 4 zeigen:

-    bei den Extrusionsdaten fällt bei allen untersuchten $SiO_2$: PE-Verhältnissen und vergleichbaren Separatorenmischungen (gleiche Kieselsäure) die Schmelzentemperatur mit steigender Oelmenge um 4 - 5 °C ab; dies gilt gleichermaßen auch für den Schmelzendruck und das besonders wichtige Drehmoment. Beim Schmelzendruck ist der Abfall mit 40 - 55 bar besonders ausgeprägt; beim Drehmoment liegt die Abnahme im Bereich von 15 - 25 %. Diese Ergebnisse zeigen, daß eine Leistungssteigerung bei der Extrusion möglich ist.

-    Überraschenderweise nimmt der Schmelzendruck mit steigendem Kieselsäure : Polymer-Verhältnis bei vergleichbaren Separatormischungen ab, das gilt auch für das Drehmoment.

-    Das Handelsprodukt HiSil[®]SBG zeigt dieses Phänomen nur für die Schmelzendruckverläufe, beim Drehmomentverlauf zeigt es sich nicht.

-    Im direkten Vergleich von gleichen Separatormischungen, die einerseits HiSil[®]SBG, andererseits erfindungsgemäße Kieselsäure nach Beispiel 2 enthalten, liegen die Schmelzendrücke für HiSil[®]SBG-haltige Mischungen um 10 - 24 % unter dem Niveau von erfindungsgemäße Kieselsäure enthaltenden Separator-mischungen; bei dem Drehmoment drehen sich die Verhältnisse um: hier liegen die erfindungsgemäße Kieselsäure enthaltenden Separatormischungen um 4 - 9 % unter solchen des Handelsproduktes.

-    Bei den Foliendaten zeigen die Separatorfolien mit der erfindungsgemäßen Kieselsäure nach Beispiel 2 unter gleichen Vorraussetzungen ihrer Herstellung je nach Mischungsverhältnis von $SiO_2$ : PE einen markant reduzierten Durchgangswiderstand von 18- 20 %. Dabei fällt der spezifische Durchgangswiderstand mit steigendem $SiO_2$ : PE-Verhältnis, bezogen auf HiSil[®]SBG-enthaltende Mischungen, ab.

-    Bei allen untersuchten $SiO_2$ : PE-Verhältnissen und vergleichbaren Separatormischungen (erfindungsgemäße Kieselsäuren) steigt die Gesamtporosität mit steigender Oelmenge um maximal 1,7 absolute Prozentpunkte an (beim Verhältnis $SiO_2$ : PE = 5 : 1). Beim Verhältnis $SiO_2$ : PE = 4 : 1 liegt dieser Anstieg nur noch bei ca. 1 % absolut, während beim Verhältnis $SiO_2$ : PE = 3,4 : 1 keine Änderung erfolgt. Beim Übergang von $SiO_2$ : PE = 3,4 : 1 auf $SiO_2$ : PE = 5 : 1 wird für die erfindungsgemäße Kieselsäure nach Beispiel 2 eine Porositätszunahme von 12 absoluten Prozentpunkten (+ 20 %) erreicht; dabei wird mit $SiO_2$ : PE-Verhältnissen von 4 : 1 und 5 : 1 ein Werteniveau der Gesamtporosität von 65. bzw. 70 % erreicht, das den bisher höchstporösen kieselsäurehaltigen Separator am Markt, das PVC-Kieselsäure-Trennelement der Firma AMERSIL (Beispiel 17),

Tabelle 5:

Hochporöse PE-SiO$_2$-Industriebatterie-Separatoren, die erfindungsgemäße Fällungskieselsäuren im Verhältnis SiO$_2$ : PE = 3,4 : 1 - 5 : 1 enthalten. Im Vergleich zu handelsüblichen Kieselsäure und im Vergleich zu PVC-SiO$_2$-Separatoren des Handels.

| Separator | Beispiel 5 Vergleich | Beispiel 8 Vergleich | Beispiel 9 Vergleich | Beispiel 12 Erfindungs-gemäß | Beispiel 13 Vergleich | Beispiel 15 Erfindungs-gemäß | Beispiel 17 AMERSIL-Separator Vergleich | Separator gemäß Anspruch 9 |
|---|---|---|---|---|---|---|---|---|
| Kieselsäure-type:<br><br>Verhältnis: SiO$_2$:PE: | HiSil SBG<br><br><br>3,4 : 1 | Erfindungs-gem. KS n. Beispiel 2<br>3,4 : 1 | HiSil SBG<br><br><br>4 : 1 | Erfindungs-gem. KS n. Beispiel 2<br>4 : 1 | HiSil SBG<br><br><br>5 : 1 | Erfindungs-gem. KS n. Beispiel 2<br>5 : 1 | Unbekannt<br><br><br>1,1 : 1 | Fällungs-kieselsäure<br><br><br>$\geq$ 4 : 1 |
| Gesamtporo-sität [%] | 55,1 | 58,4 | 60,3 | 64,8 | 63,1 | 70,1 | 63,2 | $\geq$64 |
| Aschegehalt [%] | 68,1 | 67,9 | 70,4 | 70,1 | 73,1 | 73,5 | 51,5 | $\geq$68 |
| Spezifischer Durchgangs-widerstand nach 24 Std.<br><br>"Soak": [m$\Omega$ in.$^2$/mil] | 1,06 | 0,81 | 0,85 | 0,57 | 0,68 | 0,42 | 0,73 | $\leq$0,60 |

Tabelle 6

| Herstellungsbedingungen und Eigenschaften von hochporösen Separatorfolien, die handelsübliche und erfindungsgemäße, sprühgetrocknete Fällungskieselsäuren enthalten. Verhältnis Kieselsäure : Polymer = 4 : 1 | | | | | |
|---|---|---|---|---|---|
| Beispiel Nr. | | 9 | 18 | 19 | 17 |
| Fällungskieselsäure: | | Handelsprodukt HiSil®SBG | Erfindungsgemäße Kieselsäure (Beispiel 3) | Erfindungsgemäße Kieselsäure (Beispiel 4) | Unbekannt AMERSIL (Vergleich) |
| Oelmenge | Gramm | 1700 | 1900 | 1900 | - |
| Schmelzentemperatur | °C | 194 | 196 | 190 | - |
| Schmelzendruck | bar | 102 | 98 | 71 | - |
| Drehmoment | % | 47 | 47 | 38 | - |
| Spezifischer Durchgangswiderstand: | | | | | |
| nach 20 Minuten "soak" | $m\Omega$ in.$^2$/mil | 1,27 | 0,78 | 1,05 | 0,93 |
| nach 24 Stunden "soak" | $m\Omega$ in.$^2$/mil | 0,85 | 0,45 | 0,58 | 0,73 |
| Gesamtporosität | Vol.% | 60,3 | 64,9 | 65,0 | 63,2 |
| Aschegehalt | Gew.% | 70,4 | 70,8 | 70,3 | 51,5 |
| Mechanische Eigenschaften: | | | | | |
| Dehnung | % | 722 | 785 | 713 | - |
| Zugfestigkeit | N/mm$^2$ | 3,43 | 3,36 | 2,82 | - |

- übertrifft. Gerade erreicht in seinem Werteniveau wird der Separator, wenn HiSil®SBG-haltige PE-Folien mit einem Verhältnis von $SiO_2$ : PE = 5 : 1 hergestellt werden.

**Beispiel 17**

Ein handelsüblicher PVC-Kieselsäure-Separator der Firma AMERSIL in Kehlen, Luxemburg, wurde in Hinblick auf seine Foliendaten charakterisiert.Das Ergebnis dieser Untersuchungen findet sich in Tabelle 5, letzte Spalte. Die Daten fallen somit nicht unter Anspruch 9 dieser Erfindung.

**Beispiel 18**

In diesem Beispiel wird die handelsübliche Kieselsäure HiSil®SBG des Beispiels 5 durch die erfindungsgemäße Kieselsäure nach Beispiel 3 ersetzt. Außerdem wird in der Rezeptur des Beispiels 5 der Oelanteil von 1655 g auf 1900 g Oel erhöht. Die Foliendaten finden sich in Tabelle 6. Die so hergestellte hochporöse erfindungsgemäße Membran fällt in den Anspruch 9 dieser Anmeldung.

**Beispiel 19**

In diesem Beispiel wird die handelsübliche Kieselsäure HiSil®SBG des Beispiels 5 durch die erfindungsgemäße Kieselsäure nach Beispiel 4 ersetzt. Außerdem wird in der Rezeptur des Beispiels 5 der Oelanteil von 1655 g auf 1900 g Oel erhöht. Die Foliendaten finden sich in Tabelle 6. Die derart hergestellte hochporöse erfindungsgemäße Membran fällt in den Anspruch 9 dieser Anmeldung.

Die erfindungsgemäßen Fällungskieselsäuren mit hoher Struktur (DBP-Zahl wasserfrei: $\geq$ 275 g/100 g und BET-Oberfläche von 100 - 130 m$^2$/g) eignen sich auch in hervorragender Weise für die Herstellung von Kieselsäure-Polyäthylenseparatoren für Auto-Starterbatterien mit einem $SiO_2$ : PE-Verhältnis von 2,5 : 1 bis 3,5 : 1 und einer Separatorstärke von 0,20 - 0,25 mm. Dabei zeigt sich überraschenderweise eine merkliche Abnahme des spezifischen Durchgangswiderstandes auf Werte unter 0,60 m Ohm · inch$^2$/mil.

Diese Aussage wird durch die Beispiele 20 und 21 belegt:

**Beispiel 20**

750 g Kieselsäure gemäß Beispiel 3 werden in einem Mischer (Type Vertikal-Universalmischer EM 25 der Firma Mischtechnik Industrieanlagen-GmbH, Detmold / BRD) mit 288 g Hostalen GUR X 106 (ultrahochmolekulare Polyäthylentype hoher Dichte der Firma HOECHST AG, Frankfurt a. M.) mit 45 g eines hochwirksamen Netzmittels und mit 8,4 g eines Phenolharzes bei einer Drehzahl von 120 Upm gemischt und anschließend mit einer Menge von 1.900 g Mobil Oel FBK 150 extra heavy, versetzt. Nach Zugabe der gesamten Oelmenge wird noch ½ Minute lang weiter vermischt. Hierdurch entsteht ein rieselfähiges und kontinuierlich dosierbares Pulver, das mit Hilfe eines Doppelschnekkenextruders (Typ ZSK 30 M 9/2 der Firma Werner & Pfleiderer, Stuttgart) mit heizbarer Flachfoliendüse von 220 mm Breite (Firma Göttfert Prüfmaschinen GmbH, Buchen) sowie mit Hilfe eines Dreiwalzenkalanders (Typ Polyfol 150 3 S der Firma Ruth Schwabenthan, Berlin) zu einer Folie von etwa 0,25 mm Dicke verarbeitet wird. Bei einer Schneckendrehzahl von 93 Upm wird ein Temperaturprofil zwischen Einzugszone des Extruders und Düse von 150 bis 200 °C gewählt. Die zwischen Extruder und Düse gemessene Schmelzentemperatur stellt sich dabei auf 191 °C ein. Am Doppelschneckenextruder lassen sich der Schmelzendruck in bar und das Drehmoment der Schnecken in % des maximal zulässigen Drehmoments als Maß für das Verarbeitungsverhalten der Mischung während der Extrusion ablesen. Aus der derart hergestellten Folie wird das Mineralöl anschließend mit Hilfe von Hexan weitgehend extrahiert, so daß eine mikroporöse Separatorfolie entsteht.

Die Messung des elektrischen Durchgangswiderstandes und der mechanischen Eigenschaften, wie Zugfestigkeit und Bruchdehnung, der von bis auf 12 - 14 % Restölgehalt extrahierten Folien wird nach Maßgabe der oben beschriebenen Methoden durchgeführt. Die an der gemäß Beispiel 20 hergestellten Folien ermittelten Meßwerte sind in Tabelle 7 zusammengestellt.

**Beispiel 21**

Es wird eine Separatormischung mit einem Kieselsäure : Polymer-Verhältnis von 3 : 1 hergestellt, anschießend extrudiert und charakterisiert. Im wesentlichen wird, wie im Beispiel 20 beschrieben, gearbeitet. Es werden jedoch nur 250 g des in Beispiel 20 verwendeten Polymers eingesetzt (statt 288 g).

Tabelle 7 zeigt, daß die Senkung des spezifischen Durchgangswiderstandes beim Übergang von einem Kieselsäure : Polyäthylen-Verhältnis von 2,6 : 1 auf 3 : 1 bei äußerst niedrigem Niveau von 0,58 m Ohm · inch$^2$/mil 7 % beträgt, wobei sich die Verarbeitungsdaten mit zunehmenden $SiO_2$ : PE-Verhältnis günstiger entwickelt. Die mechanisierten Daten fallen zwar etwas ab, sind aber im absolut sicheren Bereich der von den Batterieherstellern geforderten Vorgaben.

Tabelle 7

| Herstellungsbedingungen und Eigenschaften von hochporösen Kieselsäure-Polyäthylen-Batterieseparatoren für Auto-Starterbatterien auf Blei-Säure-Basis mit einer Filmstärke von 0,25 mm. | | | |
|---|---|---|---|
| Variable: Kieselsäure-Polymerverhältnis ($SiO_2$ : PE) | | | |
| Beispiel Nr. | | 20 | 21 |
| Fällungskieselsäure | | Erfindungsgemäße Kieselsäure (Beispiel 3) | Erfindungsgemäße Kieselsäure (Beispiel 3) |
| $SiO_2$ : PE-Verhältnis | | 2,6 : 1 | 3,0 : 1 |
| Schmelzentemperatur | °C | 191 | 189 |
| Schmelzendruck | bar | 116 | 102 |
| Drehmoment | % | 55 | 53 |
| Spezifischer Durchgangswiderstand: | | | |
| nach 20 Minuten „soak" | $m\Omega \cdot in.^2$/mil | 0,76 | 0,66 |
| nach 24 Stunden „soak" | $m\Omega \cdot in.^2$/mil | 0,58 | 0,54 |
| Mechanische Eigenschaften: | | | |
| Dehnung | % | 999 | 940 |
| Zugfestigkeit | $N/mm^2$ | 5,30 | 4,20 |

**Patentansprüche**

1. Fällungskieselsäure mit den physikalisch-chemischen Kenndaten:

| BET-Oberfläche: | DIN 66131 | 100 - 130 $m^2$/g |
|---|---|---|
| DBP-Absorption (wasserfrei): | DIN 53601 | $\geq$ 275 g/100 g |
| | ASTM D 2414 | |
| Trocknungsverlust (2 h/105 °C) : | DIN ISO 787/II | 3,5 - 5,5 Gew.-% |
| | ASTM D 280 | |
| | JIS K 5101/21 | |
| Siebrückstand mit ALPINE-Luftstrahlsieb: | | |
| > 63 $\mu$m | | $\leq$ 10,0 Gew.-% |
| > 150 $\mu$m | | $\leq$ 0,1 Gew.-% |
| > 250 $\mu$m | | $\leq$ 0,01 Gew.-% |

2. Fällungskieselsäure nach Anspruch 1 mit einem Chloridgehalt von $\leq$ 100 pm Cl.

3. Verfahren zur Herstellung von Fällungskieselsäure mit den physikalisch-chemischen Kenndaten:

| BET-Oberfläche: | DIN 66131 | 100 - 130 m$^2$/g |
|---|---|---|
| DBP-Absorption (wasserfrei): | DIN 53601 | $\geq$ 275 g/100 g |
| | ASTM D 2414 | |
| Trocknungsverlust (2 h/105 °C) : | DIN ISO 787/II | 3,5 - 5,5 Gew.-% |
| | ASTM D 280 | |
| | JIS K 5101/21 | |
| Siebrückstand mit ALPINE-Luft-strahlsieb: | | |
| > 63 μm | | $\leq$ 10,0 Gew.-% |
| > 150 μm | | $\leq$ 0,1 Gew.-% |
| > 250 μm | | $\leq$ 0,01 Gew.-% |

nach Anspruch 1, indem man in einem Fällbehälter unter Rühren heißes Wasser von 90 - 91 °C vorlegt; handelsübliches Wasserglas mit einem Modul $SiO_2 : Na_2O = 3,34:1$ ($SiO_2 = 26,8$ Gew.-%; $Na_2O$: 8,0 Gew.-%) solange hinzugibt, bis eine bestimmte Alkalizahl erreicht ist; danach unter Konstanthalten der Temperatur während der gesamten Fälldauer von 90 Minuten weiteres Wasserglas derselben Spezifikation und Schwefelsäure gleichzeitig an zwei voneinander getrennten Stellen derart hinzu gibt, daß die vorgegebene Alkalizahl eingehalten wird; danach die Fällungskieselsäuresuspension mit konzentrierter Schwefelsäure bis zu einem pH-Wert von 8,5 innerhalb von ca. 20 Minuten ansäuert, die Zugabe der Schwefelsäure unter Rühren und bei 90 - 91 °C dreißig Minuten unterbricht, danach weiter bis pH = 4 mit konzentrierter Schwefelsäure ansäuert; danach die Fällungskieselsäure, deren Feststoffgehalt in der Suspension ca. 88 g/l aufweist, mittels einer Kammerfilterpresse abtrennt, wäscht, den erhaltenen Filterkuchen mittels Wasser und mechanischer Scherkräfte verflüssigt, mittels eines Sprühtrockners mit Zentrifugalzerstäuber trocknet und mittels einer Pendelmühle vermahlt, dadurch gekennzeichnet, daß man während der Fällung eine konstante Alkalizahl im Bereich von 5 - 15, vorzugsweise von 7 einstellt.

4. Verfahren nach Anspruch 3, dadurch gekennzeichnet, daß man während der Sprühtrocknung mit einem Feststoffgehalt der zu versprühenden Kieselsäurespeise von 16 - 20 %, vorzugsweise von 18 %, einer Zentrifugalzerstäuberdrehzahl von 10.000 - 12.000 Upm. und Eintrittstemperaturen der Heizgase von 700 - 750 °C sowie Austrittstemperaturen von 90 - 120 °C arbeitet.

5. Verfahren nach Ansprüchen 3 und 4, dadurch gekennzeichnet, daß an Stelle einer Pendelmühle eine Querstrommühle zur Vermahlung verwendet wird.

6. Verfahren nach Anspruch 3, dadurch gekennzeichnet, daß man das Auswaschen des mittels einer Filterpresse abgetrennten Filterkuchen mit chloridarmen Wassers ($\leq$ 20 ppm Chlorid), vorzugsweise Deionat oder Kondensat, vornimmt, und zwar so lange, bis sich im vermahlenen Endprodukt ein Chloridgehalt von $\leq$ 100 ppm Chlorid einstellt.

7. Verfahren nach Anspruch 3, dadurch gekennzeichnet, daß man an Stelle eines Sprühtrockners einen Spinflashtrockner verwendet.

8. Verfahren nach Anspruch 7, dadurch gekennzeichnet, daß man auf eine Vermahlung der spinflashgetrockneten Kieselsäure verzichtet.

9. Verwendung der Kieselsäure gemäß den Ansprüchen 1 oder 2 in Polyäthylen-Kieselsäuren-Batterieseparatoren für Industriebatterien auf Blei-Säure-Basis, dadurch gekennzeichnet, daß die Separatoren eine Gesamtporosizität von $\geq$ 64 %, einen spezifischen Durchgangswiderstand nach 24-stündiger Tränkung in 37 %iger Batteriesäure von $\leq$ 0,60 m Ohm • inch$^2$/mil und einen Aschegehalt von $\geq$ 68 Gew. % bei einem Restölgehalt von 12 - 14 % aufweisen.

10. Verwendung der Kieselsäure gemäß den Ansprüchen 1 oder 2 in Kieselsäure-Batterieseparatoren für Starterbatterien auf Blei-Säure-Basis mit einem Kieselsäure : Polyäthylen-Verhältnis von 2,5 : 1 - 3,5 : 1, dadurch gekennzeichnet, daß die 8 - 10 mil-Separatoren einen spezifischen Durchgangswiderstand von $\leq 0{,}60$ m Ohm $\cdot$ inch$^2$/mil bei einem Restölgehalt von 12 - 14 % aufweisen.

**Claims**

1. Precipitated silica having the physicochemical characteristic data:

| BET surface area | DIN 66131 | 100 - 130 m$^2$/g |
|---|---|---|
| DBP absorption (anhydrous): | DIN 53601 | $\geq$ 275 g/100 g |
| | ASTM D 2414 | |
| Loss on drying (2 h/105°C): | DIN ISO 787/II | 3.5 - 5.5 wt.% |
| | ASTM D 280 | |
| | JIS K 5101/21 | |
| Screen oversize with ALPINE air-jet screen: | | |
| > 63 $\mu$m | | $\leq$ 10.0 wt.% |
| > 150 $\mu$m | | $\leq$ 0.1 wt.% |
| > 250 $\mu$m | | $\leq$ 0.01 wt.% |

2. Precipitated silica according to claim 1, having a chloride content of $\leq$ 100 pm Cl.

3. Process for the preparation of precipitated silica having the physicochemical characteristic data:

| BET surface area | DIN 66131 | 100 - 130 m$^2$/g |
|---|---|---|
| DBP absorption (anhydrous): | DIN 53601 | $\geq$ 275 g/100 g |
| | ASTM D 2414 | |
| Loss on drying (2 h/105°C): | DIN ISO 787/II | 3.5 - 5.5 wt.% |
| | ASTM D 280 | |
| | JIS K 5101/21 | |
| Screen oversize with ALPINE air-jet screen: | | |
| > 63 $\mu$m | | $\leq$ 10.0 wt.% |
| > 150 $\mu$m | | $\leq$ 0.1 wt.% |
| > 250 $\mu$m | | $\leq$ 0.01 wt.% |

according to claim 1, in which hot water at a temperature of 90 to 91°C is placed in a receiving flask, with stirring; commercial waterglass containing a SiO$_2$ : Na$_2$O module = 3.34:1 (SiO$_2$ = 26.8 wt.%; Na$_2$O = 8.0 wt.%) is added thereto until a specific alkali value is attained; then, with the temperature being held constant throughout the entire precipitation period of 90 minutes, further waterglass of the same specification and sulfuric acid are added thereto simultaneously at two places separated from one another, to the extent that the given alkali value is maintained; then the suspension of precipitated silica is acidified with concentrated sulfuric acid over a period of approximately 20 minutes to a pH value of 8.5, the addition of sulfuric acid with stirring and at 90 to 91°C is interrupted for thirty minutes, then acidification with concentrated sulfuric acid is continued to pH 4; then the precipitated silica, the solids content of which in the suspension is approximately 88 g/l, is separated by means of a chamber filter press and washed, the filter cake obtained is liquefied by means of water and mechanical shear forces, dried by means of a spray dryer with centrifugal atomiser and ground by means of a pendulum roller mill, characterised in that during the precipitation a constant alkali value in the range of 5 to 15, preferably of 7, is established.

4. Process according to claim 3, characterised in that the operating conditions during the spray drying are a solids content of the silica feed to be sprayed of from 16 to 20%, preferably 18%, a centrifugal atomiser speed of 10,000 to 12,000 rpm and inlet temperatures of the hot gases of 700 to 750°C and outlet temperatures of 90 to 120°C.

5. Process according to claims 3 and 4, characterised in that a cross-current mill instead of a pendulum roller mill is used for the grinding.

6. Process according to claim 3, characterised in that the filter cake which has been separated by means of a filter press is washed with water low in chloride ($\leq$ 20 ppm chloride), preferably deionised water or condensate, and until a chloride content of $\leq$ 100 ppm chloride is established in the ground end product.

7. Process according to claim 3, characterised in that a spin-flash dryer is used instead of a spray dryer.

8. Process according to claim 7, characterised in that grinding of the spin-flash dried silica is dispensed with.

9. Use of the silica according to claims 1 or 2 in polyethylene-silica battery separators for industrial lead-acid batteries, characterised in that the separators have a total porosity of $\geq$ 64%, a specific volume resistance of $\leq$ 0.60 m ohm • $inch^2$/mil after soaking for 24 hours in 37% battery acid and an ash content of $\geq$ 68 wt.% at a residual oil content of 12 to 14%.

10. Use of the silica according to claims 1 or 2 in silica battery separators for lead-acid starter batteries having a silica : polyethylene ratio of 2.5 : 1 to 3.5 : 1, characterised in that the 8 to 10 mil separators have a specific volume resistance of $\geq$ 0.60 m ohm • $inch^2$/mil at a residual oil content of 12 to 14%.

**Revendications**

1. Acide silicique de précipitation ayant les caractéristiques physico-chimiques suivantes :

| Surface BET : | DIN 66131 | 100-130 $m^2$/g |
|---|---|---|
| Absorption de DBP (anhydre) : | DIN 53601 | $\geq$ 275 g/100 g |
| | ASTM D 2414 | |
| Perte au séchage (2 heures/105°C) : | DIN ISO 787/II | 3,5-5,5 % en poids |
| | ASTM D 280 | |
| | JIS K 5101/21 | |
| Résidu de tamisage avec tamis à jet d'air ALPINE : | | |
| > 63 $\mu$m | | $\leq$ 10,0 % en poids |
| > 150 $\mu$m | | $\leq$ 0,1 % en poids |
| > 250 $\mu$m | | $\leq$ 0,01 % en poids |

2. Acide silicique de précipitation selon la revendication 1 ayant une teneur en chlorure inférieure ou égale à 100 pm de Cl.

3. Procédé de fabrication d'acide silicique de précipitation ayant les caractéristiques physico-chimiques suivantes :

| Surface BET : | DIN 66131 | 100-130 m$^2$/g |
|---|---|---|
| Absorption de DBP (anhydre) : | DIN 53601 | ≥ 275 g/100 g |
| | ASTM D 2414 | |
| Perte au séchage (2 heures/105°C) : | DIN ISO 787/II | 3,5-5,5 % en poids |
| | ASTM D 280 | |
| | JIS K 5101/21 | |
| Résidu de tamisage avec tamis à jet d'air ALPINE : | | |
| > 63 μm | | ≤ 10,0 % en poids |
| > 150 μm | | ≤ 0,1 % en poids |
| > 250 μm | | ≤ 0,01 % en poids |

selon la revendication 1, dans lequel dans un récipient de précipitation, tout en agitant, on dispose de l'eau chaude à 90-91°C ; on ajoute un orthosilicate du commerce ayant un module SiO$_2$:Na$_2$O = 3,34:1 (SiO$_2$ = 26,8 % en poids ; Na$_2$O = 8,0 % en poids) jusqu'à ce qu'on atteigne un indice de basicité déterminé ; puis en maintenant la température constante pendant toute la durée de la précipitation qui est de 90 minutes, on ajoute une quantité supplémentaire d'orthosilicate de même spécification et d'acide silicique simultanément à deux endroits séparés différents de manière à maintenir l'indice de basicité préalablement donné, puis on acidifie la suspension d'acide silicique de précipitation avec de l'acide sulfurique concentré jusqu'à un pH de 8,5 en environ 20 minutes, on interrompt l'addition de l'acide sulfurique en agitant et à 90-91°C pendant 30 minutes, puis on acidifie encore jusqu'à pH = 4 avec de l'acide sulfurique concentré ; puis on sépare l'acide silicique de précipitation, dont la teneur en solides dans la suspension s'élève à environ 88 g/l, au moyen d'un presse filtre à plateaux, on lave, on liquéfie la gâteau de filtration obtenu en employant de l'eau et des forces de cisaillement mécaniques, on sèche au moyen d'un appareil de séchage par pulvérisation avec un pulvérisateur à centrifugation et on broie au moyen d'un broyeur à cylindres,
caractérisé en ce que
pendant la précipitation on établit un indice de basicité constant dans un intervalle de 5 à 15, de préférence de 7.

4. Procédé selon la revendication 3,
caractérisé en ce que
pendant le séchage par pulvérisation on travaille avec une teneur en solides de la charge d'acide silicique à pulvériser de 16 à 20 %, de préférence de 18 %, une rotation de l'appareil de pulvérisation par centrifugation de 10 000 à 12 000 tpm et des températures d'entrée des gaz chauffants de 700 à 750°C ainsi que des températures de sortie de 90 à 120°C.

5. Procédé selon les revendications 3 et 4,
caractérisé en ce qu'
au lieu d'un broyeur à cylindres on utilise un broyeur à courant transversal pour le broyage.

6. Procédé selon la revendication 3,
caractérisé en ce qu'
on effectue l'extraction par lavage du gâteau de filtration séparé au moyen d'une presse de filtration avec de l'eau pauvre en chlorure (inférieure ou égale à 20 ppm de chlorure), de préférence un produit de désionisation ou de condensation, et cela jusqu'à ce qu'il s'établisse dans le produit final broyé une teneur en chlorure inférieure ou égale à 100 ppm de chlorure.

7. Procédé selon la revendication 3,
caractérisé en ce qu'
à la plaque d'un appareil de séchage par pulvérisation on utilise un appareil de séchage instantané à rotation.

**8.** Procédé selon la revendication 7,
caractérisé en ce qu'
on renonce à un broyage de l'acide silicique séché de façon instantanée avec rotation.

**9.** Utilisation de l'acide silicique selon les revendications 1 ou 2 dans des séparateurs de batterie en polyéthylène-acides siliciques pour batteries industrielles à base de plomb et d'acide,
caractérisée en ce que
les séparateurs présentent une porosité totale supérieure ou égale à 64 %, une résistance interne spécifique au bout de 24 heures d'imbibition dans de l'acide de batterie à 37 % inférieure ou égale à 0,60 mOhm x pouce$^2$/mil et une teneur en cendres supérieure ou égale à 68 % en poids à une teneur en huile résiduelle de 12 à 14 %.

**10.** Utilisation de l'acide silicique selon les revendications 1 ou 2 dans des séparateurs de batterie en acide silicique pour batteries de starter d'automobile à base de plomb et d'acide avec un rapport acide silicique:polyéthylène de 2,5:1-3,5:1,
caractérisée en ce que
les séparateurs de 8 à 10 mil (0,02032-0,2510 mm) présentent une résistance interne spécifique inférieure ou égale à 0,60 mOhm x pouce$^2$/mil a une teneur en huile résiduelle de 12 à 14 %.